# EUROPEAN PATENT APPLICATION

(11) **EP 2 095 988 A1**
(43) Date of publication of application: **02.09.2009**
(21) Application number: 07832358.1
(22) Date of filing: 22.11.2007
(51) Int. Cl.: B60K 35/00, B60J 1/02, G02B 27/01

(54) **HEADUP DISPLAY SYSTEM OF HIGH VISIBILITY**

(30) Priority: 29.11.2006 JP 2006321830; 29.11.2006 JP 2006321831
(71) Applicant: Calsonic Kansei Corporation, Saitama-shi Saitama 331-8501 (JP)
(72) Inventor: ISHII, Mikio c/o CALSONIC KANSEI CORPORATION, Saitama 331-8501 (JP); ARAI, Kazuo c/o CALSONIC KANSEI CORPORATION, Saitama 331-8501 (JP); OGASAWARA, Takeshi c/o CALSONIC KANSEI CORPORATION, Saitama 331-8501 (JP); ITSUKAICHI, Tadashi c/o CALSONIC KANSEI CORPORATION, Saitama 331-8501 (JP)
(74) Representative: Oxley, Robin John George
(86) International application number: PCT/JP2007/072629
(87) International publication number: WO 2008/065956

(57) **Abstract**

In a high visibility head-up display system where display light outputted from a display part 12 is reflected near a position of a front window shield 7, a portion of a masking portion 2a that covers a circumferential portion of the front window shield 7 is enlarged to form an area-enlarged masking portion 2. The display light is outputted from the display part 12 in a portion of the front window shield 7corresponding to the area-enlarged masking portion 2, and the display light is reflected on the area-enlarged masking portion 2. The area-enlarged masking portion 2 functions as a background part of a display.

## Description

### [TECHNICAL FIELD]

The present invention belongs to technology of a high visibility head-up display system that can improve the visibility of a head-up display (HUD).

### [BACKGROUND OF THE INVENTION]

A conventional head-up display system is disclosed in Japanese Patent Application Publication No. 2005 - 35406, and it discloses a construction in which a display unit is installed in an instrument panel and light outputted from the display unit is reflected on a front window shield so that a driver can see and recognize a virtual image produced by the reflected light.
Another conventional one is disclosed in Japanese Patent Application Publication No. 2006 - 205955, and it discloses a construction in which the light is reflected on a display object (a combiner) as an individual one, which is attached on a front window shield, so as to produce the virtual image.

### [DISCLOSURE OF THE INVENTION]

### [PROBLEM(S) TO BE SOLVED BY THE INVENTION]

However, in the conventional high visibility head-up display systems, the virtual images, which are produced by the light that is reflected on the front window shield or the combiner, are seen as displayed characters, which are overlapped with scenery visible through the front window shield. As a result, they have a problem in that the visibility of the displayed characters deteriorates so that the driver can hardly see the characters in a case where a background is bright and in a case where the background has the same system color as one displayed by the HUD, because the visibility notably changes depending on the brightness (bright and dark), color tone and others of the background.

The present invention is made to solve the above-described problem, and an object of the present invention is to provide a high visibility head-up display system that can obtain a high visibility of a display with high contrast, being manufacturable at low costs.

### [MEANS FOR SOLVING THE PROBLEMS]

In order to achieve the above object, the present invention is constructed as follows. In a head-up display system where display light, which is produced by a display part of a head-up display unit, is reflected near a position of a front window shield and a virtual image produced by the reflected light is displayed to a driver, the system is **characterized in that** a portion of a colored portion that covers a circumferential portion of the front window shield is enlarged to form an area-enlarged and colored portion, and display light outputted from the display unit is reflected on a portion, of the front window shield, corresponding to the area-enlarged and colored portion so as to produce a display of the virtual image with a background part, of the display, which is formed by the area-enlarged and colored portion.

### [EFFECT OF THE INVENTION]

Therefore, in the present invention, the portion of the front window shield corresponding to the area-enlarged and colored portion reflects the display light to produce the virtual image of the display, and the area-enlarged and colored portion functions as the background of the display. Therefore, the system of the present invention can provide high visibility with high contrast, by suppressing the adverse influence of the scenery visible through the front window shield. In addition, the system of the present invention can be manufactured at low cost, since the area-enlarged and colored portion uses the colored portion that is originally necessary and the area-enlarged and colored portion is obtained by enlarging the portion of the colored portion.

### [BRIEF DESCRIPTION OF THE DRAWINGS]

The objects, features and advantages of the present invention will become apparent as the description proceeds when taken in conjunction with the accompanying drawings, in which:
FIG. 1 is a cross sectional view schematically showing a construction of a high visibility head-up display system of a first embodiment according to the present invention;
FIG. 2 is an enlarged front view showing an area-enlarged masking portion that is provided in a portion of a circumferential portion of a front window shield and is used for the high visibility head-up display system of the first embodiment;
FIG. 3 is an enlarged cross sectional side view showing the area-enlarged masking portion of the high visibility head-up display system of the first embodiment;
FIG. 4 is a front view showing the area-enlarged masking portion and a masking portion, which are provided on the front window shield, of the high visibility head-up display system of the first embodiment;
FIG. 5 is an enlarged front view showing one side portion of the masking portion that is continuously formed with both sides of the area-enlarged masking portion of the high visibility head-up display system of the first embodiment;
FIG. 6 is an enlarged front view showing a gradation portion in the masking portion of the high visibility head-up display system of the first embodiment, where (a) is an enlarged view illustrating an entire image of the gradation portion, and (b) is a further enlarged view showing the gradation portion shown in (a);
FIG. 7 is an enlarged front view showing one side portion of a masking portion that is continuously formed with both sides of an area-enlarged masking portion of a high visibility head·up display system of a second embodiment according to the present invention;
FIG. 8 is a cross sectional side view schematically showing a detail of a position relationship between a front window shield and an adhesion layer of an area-enlarged masking portion of a high visibility head·up display system of a third embodiment according to the present invention;
FIG. 9 is a view showing an undesirable example in a state where locations of the adhesion layer and the area-enlarged masking portion are changed from the location thereof shown in FIG. 8;
FIG. 10 is a view showing an example of a display that is produced by a construction shown in FIG. 9, and also illustrating a problem thereof; and
FIG. 11 is a view showing an example of a display produced by the high visibility head-up display system of the third embodiment shown in FIG. 8.

### [DESCRIPTION OF REFERENCE NUMBERS]

- 1: head-up display (HUD) unit
- 2: area-enlarged masking portion
- 2a: masking portion
- 2b: gradation portion
- 3: instrument panel
- 3a: concave portion
- 4: indicator
- 5: duct
- 6: partition wall
- 7: front window shield
- 71: glass
- 72: glass
- 73: adhesion layer
- 8: hood
- 9: steering wheel
- 11: control part
- 12: display part
- 13: light source
- 20: virtual image
- 30: virtual image
- 100: light path
- 200: light path

### [BEST MODE FOR CARRYING OUT THE INVENTION]

Hereinafter, best modes to realize a high visibility head-up display system of the present invention will be explained based on embodiments.

### [FIRST EMBODIMENT]

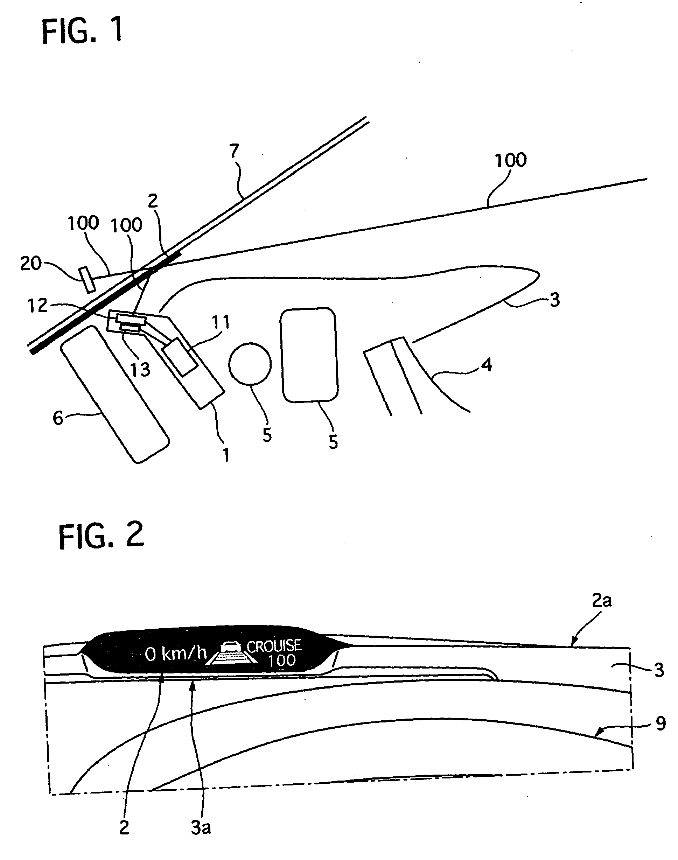

First, a construction of a first embodiment according to the present invention will be described with reference to the accompanying drawings. The first embodiment is an example that uses an area-enlarged masking portion as a reflecting portion, where the area-enlarged masking portion is provided in a portion of a circumferential portion of a front window shield,. FIG. 1 is a cross sectional view illustrating a main construction of the high visibility head-up display system of the first embodiment.

The high visibility head-up display system of the first embodiment includes a head-up display FEUD) unit 1 and an area-enlarged masking portion 2. As shown in FIG. 1, the HUD unit 1 is installed inside a front portion of an instrument panel 3 at a rear side of a partition plate 6 that divides a passenger chamber and an engine room from each other. This installation position is a front side position of an indicator 4 and a duct 5 that is provided inside the installment panel 3, as shown in FIG. 1.

The HUD unit 1 includes a control part 11, a display part 12 and a light source 13.
The control part 11 receives information on a display from various devices and others of a motor vehicle, and it executes control of contents to be displayed by the display part 12 and control of the light source 13.
The display part 12 produces an image based on data on the display contents that are determined by the control part 11 to provide the display.
Herein, a liquid crystal display is given as a concrete example of the display part 12. A direction of the light outputted from the display part 12 is designed to direct to the area-enlarged masking portion 2.
The light source 13 projects the light as a backlight of the display part 12, providing the brightness sufficient to display a virtual image.

Next, the area-enlarged masking portion 2 of the high visibility head-up display system of the first embodiment will be described. In the meantime, the area-enlarged masking portion 2 corresponds to an area-enlarged and colored portion of the present invention.

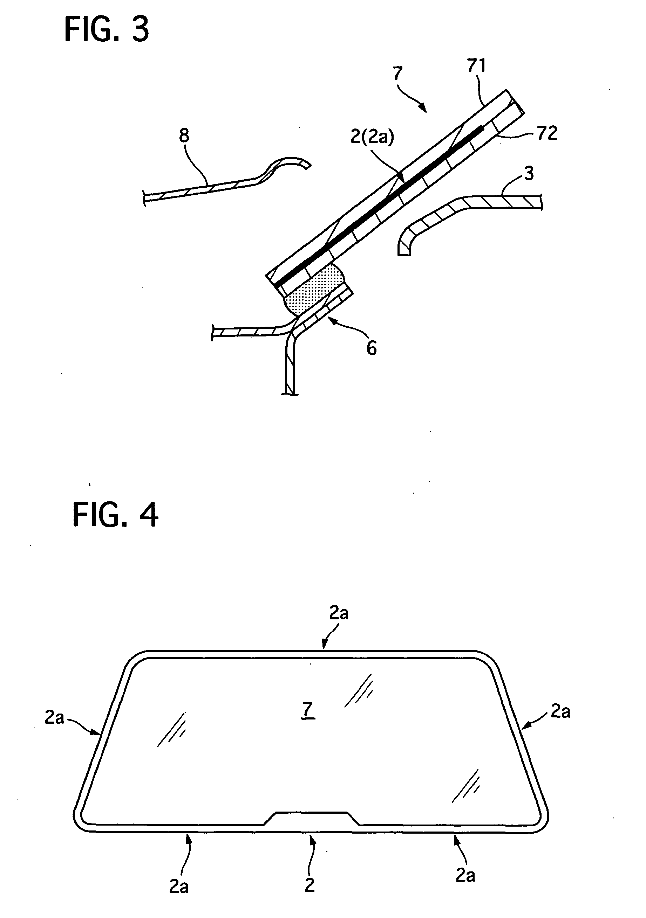

FIG. 2 is a view showing the area-enlarged masking portion 2 of the high visibility head-up display system of the first embodiment, FIG. 3 is a cross sectional view showing the area-enlarged masking portion 2 of the high visibility head-up display system of the first embodiment, and FIG. 4 is a view showing the area-enlarged masking portion 2 and a masking portion of the high visibility head-up display system of the first embodiment.

In the first embodiment, as shown in FIG. 4, a circumferential portion of the front window shield 7 is composed of the masking portion 2a and the area-enlarged masking portion 2 with a height higher than that of the masking portion 2a.
As shown in FIG. 3, the front window shield has two glasses 71 and 72 that are laminated with each other. The area-enlarged masking portion 2 and the masking portion 2a are constructed by a colored portion, for example a black ceramic coated portion, which is formed between the glasses 71 and 72 in the front window shield. The area-enlarged masking portion 2 is designed so that both of reflectance and transmittance of light become smaller than those of a combiner, namely an enhanced reflection film, which is used in a conventional head-up display. In the meanwhile, the black ceramic coated portion of the area-enlarged masking portion 2 is indicated by half-tone dot meshing for convenience sake in the drawings including FIG. 2. The masking portion 2a corresponds to a colored portion of the present invention.

In addition, as shown in FIG.4, the area-enlarged masking portion 2 is set so that a portion of the masking portion 2a, which is provided at the circumferential portion of the front window shield 7, becomes higher than the rest portion thereof.
The area-enlarged masking portion 2 is provided in a lower portion of the front window shield and at a position between a central portion in a lateral direction of the motor vehicle and a steering wheel 9 so that the area-enlarged masking portion 2 can avoid shading (lacking a part of an image due to covering by an obstacle) where a driver cannot see a part of the image due to the existence of a portion of the instrument panel 3 forming an indicator cover and the steering wheel 9.
Incidentally, the area-enlarged masking 2 may be located in a front of the driver in a case where the steering wheel is positioned at a position and has a configuration where the display is free from being blocked. In that case, the driver can instantaneously see the display.
In addition, a portion of the instrument panel 3, corresponding to the area-enlarged masking portion2, is dented down below, being indicated as a concave portion 3a, and the area-enlarged masking portion 2 is formed like a horizontally long hexagon as shown in FIG. 2. In this case, an upper surface of the instrument panel 3 except the concave portion 3a, namely a normal surface, is set at a position as high as possible, so that the concave portion 3a with a configuration dented down below is formed only at the portion of the HUD that is used for reflecting to provide the display

Next, the masking portion 2a that is formed continuously with the both sides of the area-enlarged masking portion 2 of the high visibility head-up display system of the first embodiment will be described.

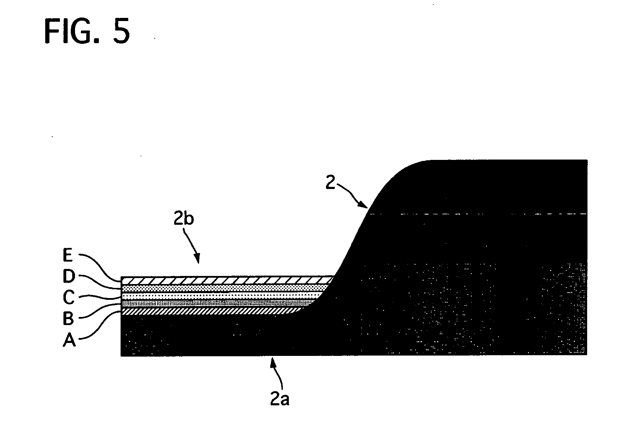

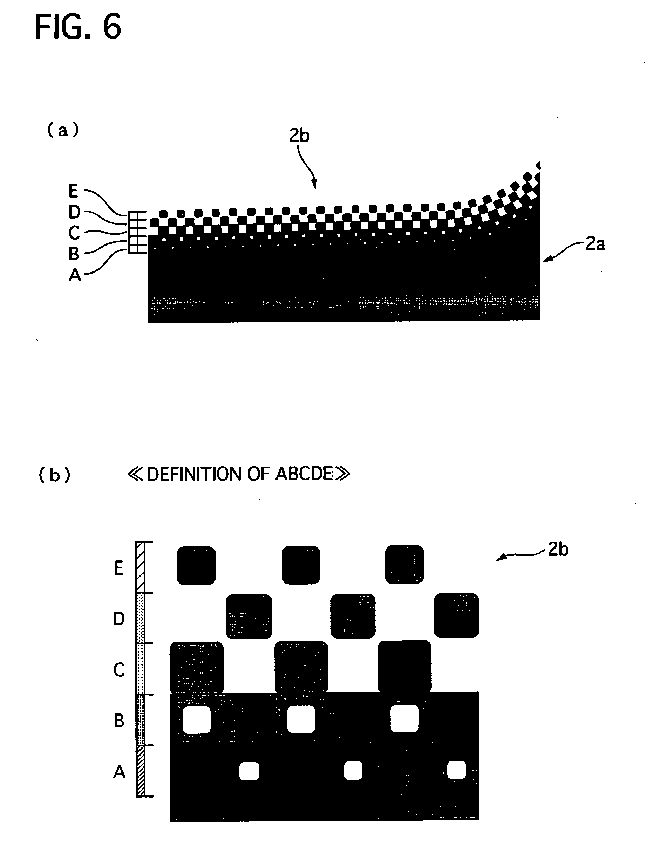

FIG. 5 is an enlarged front view showing the masking portion that is formed continuously with the both sides of the area-enlarged masking portion 2 of the high visibility head-up display system of the first embodiment, and FIG. 6 is an enlarged front view showing a gradation portion formed in the masking portion.

In the first embodiment, as shown in FIG. 5, graduation portions 2b are formed in the masking portion 2a that is continuously formed with the left and right sides of the area-enlarged masking portion 2.
The graduation portions 2b are formed approximately horizontally along the masking portion 2a, while they are not formed in the area-enlarged masking portion 2. As shown in FIG. 6(a), each graduation portion 2b is formed so that layers are overlapped to change from a black coated layer to a not-coated layer through which the driver can see an exterior as the layer goes upward. In other words, the graduation portion has a meshed arrangement in which a mesh becomes rougher as the layer thereof goes upward. FIG 6(b) is an enlarged view of the graduation portion 2b of FIG 6(b).

In the most-lowest side portion A (the side nearest to the masking portion 2a), rectangular optical transparent portions without a coating are regularly arranged in the black coated portion. In a portion B at an upper side of the portion A, the rectangular optical transparent portions without the coating are increased in area and regularly arranged in the black coated portion. In a portion C at a further upside, the black coated portion and the rectangular optical transparent portions without the coating have the same area and regularly arranged. In a portion D at a further upward side, the rectangular black coated portions are regularly arranged in the optical transparent portion without the coating. In a portion E at the most-upward side (the side farthest from the masking portion 2a), the rectangular black coated portions are regularly arranged so that they are formed to be smaller in area than those in the portion D. Thus the graduation portion 2b is provided so that areas of the optical transparent portions gradually increase to have a graduation function in a vertical direction.

Next, the operation of the first embodiment will be described.

### <The Operation To Highly Improve The Visibility>

In the high visibility head-up display system of the first embodiment, the display part 12, which is displaying the display contents under control of the control part 11, is illuminated by the light outputted from a rear side thereof, so that the display light travels along a light path 100 to be reflected on the glass 72 corresponding to an area portion of the area-enlarged masking portion 2, seen from a driver's side, and the display light goes along an eye line of the driver. Thus, the driver can see the display at a position of a virtual image 20 which is shown in FIG. 1. In this case, the background of the display is the area-enlarged masking portion 2, and accordingly the driver can see the background and the virtual image 20 in an overlapped state thereof.

The background of the display, which is formed by the reflected virtual image, is always black regardless of the circumferential scenery. As a result, the high visibility of the display with very high contrast can be obtained regardless of the ambient surrounding. In addition, since the background is reflected on the glass 72 of the black portion, the display with high visibility can be obtained relative to that of the conventional type systems that reflects the display light on the approximately transparent glass, although the brightness of the display part 12 is low. This can decrease consumption current thereof.

In other words, the display part 12 does not need to be brighter relative to that of the conventional head-up displays where the light outputted from the display part 12 is reflected on the substantially transparent portion of the front window shield 7 or the combiner as an independent object, so that load on the display part 12 or the light source 13 can be decreased.

### <The Operation To Suppress The Influence On The Front Visibility>

The masking portion 2a, which is provided at the peripheral portion of the front window shield 7, is originally used in the conventional ones. In a case where the masking portion 2a is not formed, for example, at the lower portion of the front window shield 7, an interior of the motor vehicle at a lower side of a hood 8 can be seen sometimes due to a position relationship between a hood 8 at the front exterior of the passenger compartment and a front end portion of the installment panel, and also due to the attachment error and the dimensional tolerance of the front window shield. It is undesirable in the view of visual quality that the interior of the motor vehicle be seen, and accordingly the masking portion 2a is provided.

In the high visibility head-up display system of the first embodiment, the area of the masking portion 2a is partially increased to form a portion necessary to provide the display, and the concave portion 3a is formed by being dented on the installment panel 3. These two operations causes to form the area-enlarged masking portion 2 with an area necessary only for the display. Accordingly, the adverse influences on the front visibility are notably suppressed.

In addition, the area-enlarged masking portion 2 is provided between the central portion in the lateral direction of the motor vehicle and the steering wheel 9 so that the driver can easily see the area-enlarged masking portion 2 that is formed with sufficient consideration of the front visibility, in other words, so that the shading cannot occur, where the shading means that a part of the display cannot be seen due to the existence of the steering wheel 9 and a part of the installment panel 3 forming a cover of the indicators 4.
Further, when the display part 12 or the position of the display in the display part 12 is set to move (in the up and down direction), accommodating to a position where the driver see, the reflection area can be decreased.
Further, instead of the first embodiment, the area-enlarged masking portion 2 may be arranged in the front of the driver depending on an installation position and a configuration of the steering wheel, and in that case the display can be provided in such a way that the driver can instantaneously see the display.

### <The Operation To improve The Visual Quality>

In the high visibility head-up display system of the first embodiment, the graduation portions 2b are provided at the both end portions of the area-enlarged masking portion 2, so that projection of the area-enlarged masking portion 2 becomes obscure.

Next, the effects of the first embodiment will be described. In the high visibility head-up display system of the first embodiment, the following effects can be obtained.

(1) In the head-up display system where the display is reflected near the position of the front window shield 7 to provide the driver with the display of the virtual image, the area-enlarged masking portion 2 is formed by the masking portion 2a, which covers the circumferential portion of the front window shield 7, being enlarged. The display light outputted from the HUD unit 1 is reflected on the portion, corresponding to the area-enlarged masking portion 2, of the glass 72 of the front window shield 7, and the area-enlarged masking portion 2 is used as the background portion of the display. Therefore, the display visibility with very high contrast can be obtained. In this case, the use of the masking portion 2 enables additional members and the number of additional manufacturing processes to be decreased.

(2) The area-enlarged masking portion 2 is enlarged by the upper side surface of the installment panel being dented downward at the position of the area-enlarged masking portion 2 to form the concave portion 3a, so that an area sufficient for providing the display can be obtained, and the front visibility of the driver can be ensured.

(3) The area-enlarged masking portion 2 is coated in dark color, so that the contrast between the display and the background can be further higher.

(4) The area-enlarged masking portion 2 is provided between the central portion of the passenger chamber and the steering wheel 9, so that the shading, where the part of the display is covered by the installment panel 3 of the cover portion of the indicator 4 or the steering wheel 9, can be avoided. Therefore, the driver can nicely see the display.

(5) The graduation portions 2b are provided at boundary portions between the masking portion 2a and the transparent portion of the front window shield 7 so as to make the border indistinct, where the masking portion 2a covers the circumferential portion of the front window shield 7 at the left and right sides thereof, being continuously connected with the area-enlarged masking portion 2. Therefore, the area-enlarged masking portion 2 can be prevented from standing-out, the visual quality being further improved.

### <SECOND EMBODIMENT>

In a high visibility head-up display system of a second embodiment according the present invention, although construction parts/portions are similar to the first embodiment in that an area-enlarged masking portion is provided in a portion of a circumferential portion of a front window shield and display light outputted from a display unit of an HUD unit is reflected on a portion of the front window shield corresponding to the area-enlarged masking portion, which is used as a background of a display. The second embodiment is an example having a configuration in which the area-enlarged masking portion and the graduation portions are moderately connected with each other at boundary portions therebetween.
First, a construction of the second embodiment will be described.

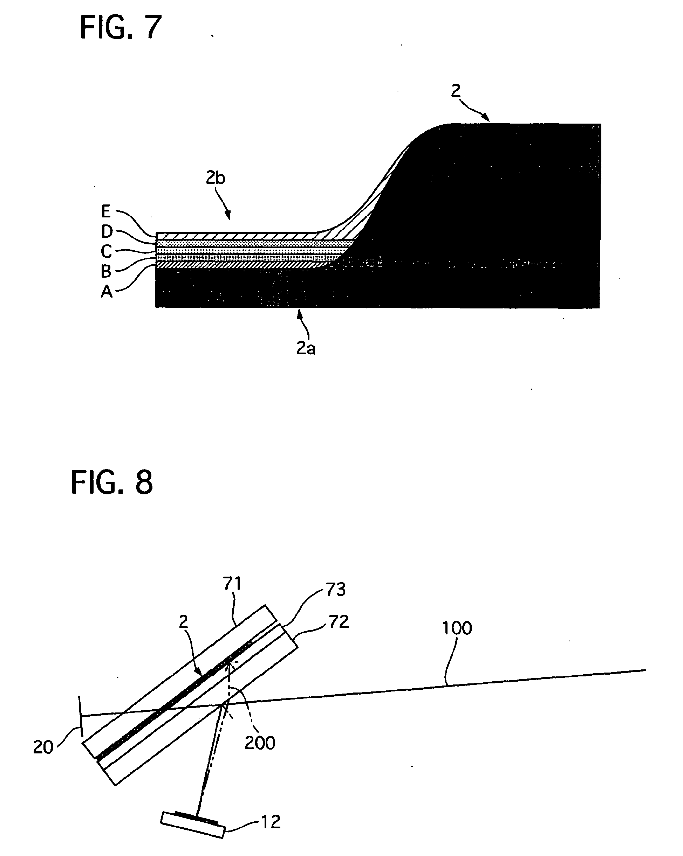

FIG. 7 is a view showing a masking portion 2a that is arranged at the both sides of the area-enlarged portion in the high visibility head-up display system of the second embodiment. In the second embodiment, graduation portions 2b are formed to become gradually smaller in area at left and right oblique lines of the area-enlarged masking portion 2 having a shape like a substantially hexagon that is horizontally long. In the meantime, although FIG. 7 shows only a left side portion thereof, a right side portion thereof is axisymmetric. The other constructions are similar to the first embodiment, and accordingly their explanations are omitted herein.

The operation of the second embodiment will be described. In the second embodiment, the graduation portions 2a grade the boundary portions between the masking portion 2a arranged at the left and right sides of the area-enlarged masking portion 2 and a transparent portion of the front window shield 7 so as to grade not only the area-enlarged masking portion 2, but only the boundary portions between the masking portion 2a and the area-enlarged masking portion 2, so that the graduation portions 2a further make the area-enlarged masking portion 2 obscure.

The effects of the second embodiment will be described.
In the high visibility head-up display system of the second embodiment, the following effects can be obtained in addition to the above-described ones of (1) to (5).
(6) The graduation portions 2b have the configuration where the graduation portions 2b and the area-enlarged masking portion 2 are formed to be moderately connected with each other so that the graduation portion 2b grades the boundary portions between the graduation portions 2b and the area-enlarged portion 2. Therefore, the standing-out of the area-enlarged masking portion 2 can be further prevented from being distinct, further improving the visual quality.
The operation and effects of the second embodiment are similar to those of the first embodiment, and accordingly their explanation is omitted.

### <THIRD EMBODIMENT>

A high visibility head-up display system of a third embodiment according to the present invention is an example where a position relationship between an adhesion layer that joins two glasses with an adhesive and an area-enlarged masking portion is specified to improve display visibility in the first embodiment and the second embodiment. Third embodiment also has the construction similar to the high visibility head-up display system shown in FIG 1 to FIG. 4.

That is, in the third embodiment, similarly to the first embodiment and the second embodiment, a masking portion 2a and an area-enlarged masking portion 2 are provided between a glass 71 located at a vehicle exterior side and a glass 72 located at a vehicle interior side so that display light outputted from a display part 12 goes to the area-enlarged masking portion 2.

Hereinafter, a construction of the masking portion 2a, the area-enlarged masking portion 2 and a front window shield 7 will be described in detail.
FIG. 8 is a cross sectional view showing a further detail of the area-enlarged masking portion of the high visibility head-up display system of the third embodiment.
As described above, the front window shield 7 has a structure of two glasses 71 and 72 that are laminated with each other. This laminated structure is obtained by an adhesive layer 73 of a film being provided between the two glasses 71 and 72. In the meantime, the adhesive layer 73 employs a transparent one like a film.

In the high visibility head-up display system of the third embodiment, in a case where the area-enlarged masking portion 2 is formed between the glasses 71 and 72 by coating, the glass 72, the adhesive layer 73, the area-enlarged masking portion 2 and the glass 71 are arranged in these order.
In other words, the adhesive layer 73 is located between the glass 72, which reflects the light outputted from the display part 12, and the area-enlarged masking portion 2. Incidentally, in this case, at least the area-enlarged portion 2 is formed to have a rough surface.

Next, the operation of the third embodiment will be described. The operation to notably improve the visibility of the third embodiment is similar to that of the first embodiment.

### <On The Arrangement Of The Adhesive Layer And The Area-Enlarged Masking Portion>

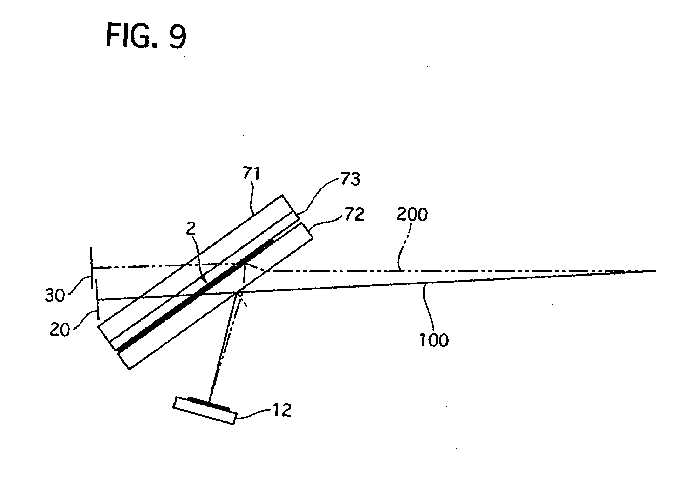

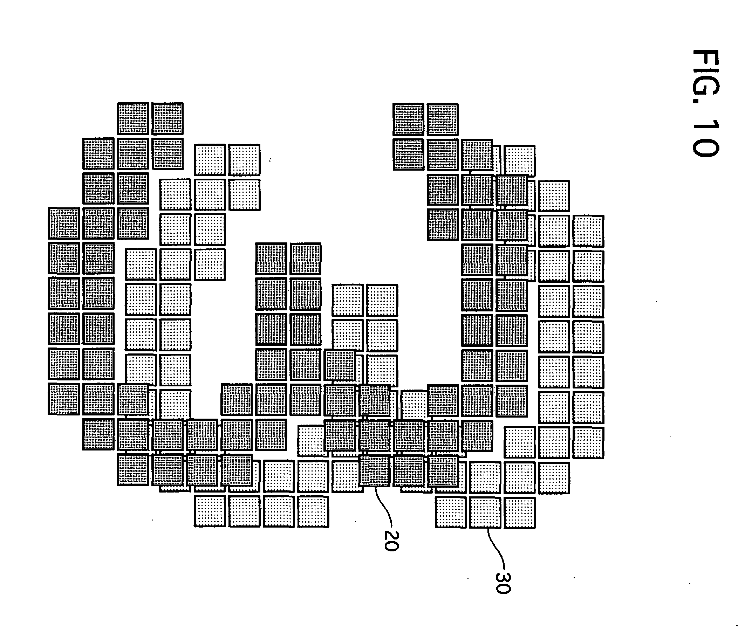

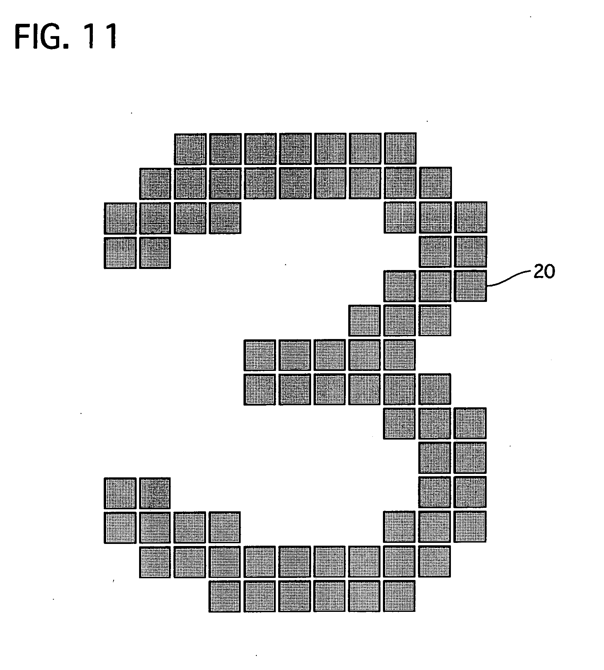

FIG. 9 is a view showing a state where the arrangement of the adhesive layer and the area-enlarged masking portion is changed from that of FIG 8, FIG. 10 is a view showing an example of a display that is produced by the construction shown in FIG. 9, and FIG. 11 is a view illustrating an example of the display that is produced by the high visibility head-up display system of the third embodiment. As shown in FIG. 9, when the glass 72, the area-enlarged masking portion 2, the adhesive layer 73 and the glass 71 are arranged in these order, the following problem occurs in that the image is seen as double image, namely the image with the ghost phenomenon is seen.

Under normal circumstances, the display light outputted from the display part 12 is reflected toward the driver on a surface of the glass 72 at the most-passenger-chamber side of the integrally-formed front window shield 7, and the reflected light forms a light path 100 to display a virtual image 20. In the construction of FIG. 9, the area-enlarged masking portion 2 is formed as a black coated portion by a printing, a coating and others at a vehicle front outer side of the glass 72 that is arranged at a vehicle interior side. Consequently, the adhesive portion (the vehicle interior side), which is attached on the vehicle front outer side of the glass 72 of the area-enlarged masking portion 2, functions as a mirror surface to nicely reflect. As a result, a rear side of the vehicle front outer side of the glass 72 reflects the display light outputted from the display part 12 toward the driver. The reflected light forms a light path 200 to display a virtual image 30.

Then, as shown in FIG 10, in a case where the glass 72 is relatively thin, the light path 200 comes close to the light path 100, so that the both lights come into driver's both eyes. This products the double image, that is, an indistinct image, in which the virtual image 20 and the virtual image 30 are partially overlapped with each other, being shifted from each other. There is room for improvement in the display quality and the visibility.
The third embodiment solves the above-described problem as follows.

In the high visibility head-up display system of the third embodiment, as shown in FIG 8, the glass 72, the adhesive layer 72, the area-enlarged masking portion 2 and the glass 71 are arranged in these order from the vehicle interior side toward the vehicle front exterior side, in other words, the adhesive layer 73 is located between the glass 72 that reflects the light outputted from the display part 12 and the area-enlarged masking portion 2. The vehicle interior side (an inner side) of the area-enlarged masking portion 2 is formed to have the rough surface that reflects the light diffusely, while the adhesive layer 73 is made of transparent material. The light outputted from the display part 12 is reflected toward the driver on the surface of the most-vehicle-interior side glass 72 of the front window shield 7 with which a part of the glass 72 is integrally formed, forming the light path 10 to display the virtual image 20.

Although the rest of the light outputted from the display part 12 is partially absorbed by the glass 72 and the adhesive layer 73, it reaches the area-enlarged masking portion 2, then being reflected on the vehicle interior side surface thereof.
In this case, since the surface of the area-enlarged masking portion 2 is formed as the rough one, the reflected light is emitted diffusely thereon, and there is little light that goes along the light path toward the driver. As a result, the virtual image is not produced.
Therefore, only the virtual image 20 due to the original light path 100 is displayed for the eyes of the driver, which provides a distinct display.

In other words, a part of the light outputted from the display part 12 is reflected on the inner side of the glass 72 of the front window shield 7, while the transmitting light that has entered in the glass 72 further passes through the adhesive layer 73 and then it is hit on the rough surface of the area-enlarged masking portion 2 to be reflected diffusely in all the possible directions, being almost not reflected toward the driver. Therefore, the virtual image can be obtained by the display due to only the light that is reflected on the inner side of the glass 72, thereby providing a distinct display.

Next, the effects of the third embodiment will be described.
In the high visibility head-up display system of the third embodiment, the following effects can be obtained.

(7) In the head-up display system where the display light is reflected near the position of the front window shield 7 to display the virtual image to the driver, the front window shield 7 is constructed by the adhesive layer 73 laminating the two glasses 71 and 72 with each other, the area-enlarged masking portion 2 is formed by the masking portion 2a covering the circumferential portion of the front window shield 7 being partially enlarged, the area-enlarged masking portion 2 is arranged between the vehicle front exterior side glass 71 and the adhesive layer 73, and the vehicle interior side surface of the area-enlarged masking portion 2 has the rough surface. As a result, when the display light is reflected on the area-enlarged masking portion 2, diffusive reflection is accelerated so as to avoid the occurrence of the double image. Therefore, even in a case where the relatively thin glass is used for the vehicle interior side one, the distinct display with high visibility can be provided, obtaining the visibility with very high contrast.

As described above, the high visibility head-up system of the present invention have been explained based on the first to third embodiments, while a concrete construction the present invention is not limited to the above-described embodiments, and its design changes and modifications are included in the present invention as long as they do not depart from the scope of the present invention.

For example, the area-enlarged masking portion 2 is a black coated one in the embodiments, while it may have another color. In this case, it is desirable that it be dark color so as to obtain the contrast of the display. In addition, the area-enlarged masking portion and the masking portion may be coated, printed or incorporated with material like a film. Further, the area-enlarged masking portion and the masking portion may have different material from each other, where the material is like a film, a coating or a printing.
Further, the graduation portion is formed like a mesh, which may be rectangular or circular, and it may be different from the mesh portion.

## Claims

1. A high visibility head-up display system where display light outputted from a display part of a head-up display unit is reflected near a position of a front window shield to provide a driver with a display produced by a virtual image due to the reflected light, the head-up display system **characterized in that**
an area-enlarged and colored portion is provided by a portion of a colored portion, which covers a circumferential portion of the front window shield, being enlarged, wherein
the display light outputting from the display unit is reflected on a portion of the front window shield corresponding to the area-enlarged and colored portion to provide the display due to the virtual image, and wherein
the area-enlarged and colored portion provides a background part of the display.

2. The high visibility head-up display system according to claim 1, wherein
an upper surface of an installment panel is dented downward at a position corresponding to the area-enlarged and colored portion to further enlarge the area-enlarged and colored portion.

3. The high visibility head-up display system according to claim 1 or claim 2, wherein
the area-enlarged and colored portion is coated in dark color.

4. The high visibility head-up display system according to any one of claims 1 to 3, wherein
the area-enlarged and colored portion is arranged between a vehicle interior central portion in a lateral direction of a motor vehicle and a steering wheel.

5. The high visibility head-up display system according to any one of claims 1 to 4, wherein
a graduation portion is provided at a boundary between the colored portion covering the circumferential portion of the front window shield at left and right sides of the area-enlarged and colored portion and a transparent portion of the front window shield, so as to make the boundary graded.

6. The high visibility head-up display system according to claim 5, wherein
the graduation portion is modestly and the area-enlarged and colored portion are formed to be moderately connected with each other so that a boundary portion between the graduation portion and the area-enlarged portion is made indistinct.

7. The high visibility head-up display system according to any one of claims 1 to 6, wherein
the front window shield has a construction where two transparent plates are attached with each other by an adhesive layer, wherein
the area-enlarged and colored portion is arranged between the transparent plates at a vehicle front exterior side and the adhesive layer, and wherein
a vehicle interior side surface of the area-enlarged and colored portion has a rough surface.

8. The high visibility head-up display system according to any one of claims 1 to 7, wherein
the area-enlarged and colored portion is formed by one of a printing, a coating and a film.
